# EUROPEAN PATENT APPLICATION

(11) **EP 2 292 310 A1**
(43) Date of publication of application: **09.03.2011**
(21) Application number: 10251418.9
(22) Date of filing: 09.08.2010
(51) Int. Cl.: B01D 46/00

(54) **Filter assembly**

(30) Priority: 07.08.2009 GB 0913961
(71) Applicant: Walker Filtration Limited, Washington, Tyne & Wear NE37 3ES (GB)
(72) Inventor: Wise, Simon, Tyne and Wear, DH4 5FB (GB); Carney, Peter, Sunderland, SR6 0RB (GB); Chalmers, Andrew, Co Durham, DH6 4SB (IE)
(74) Representative: Gill, Stephen Charles

(57) **Abstract**

A filter assembly is provided for removing entrained material from a fluid stream. The assembly comprises a manifold with a port through which the fluid is received into or removed from the assembly, and a housing into which is inserted a tubular filter element having walls of a filtration medium. The housing and the manifold have joining formations which allow them to be joined together and separated apart by relative rotation. The filter element has an end cap thereon which sealingly engages with the manifold. The end cap has an opening therein which accepts fluid received through the port and feeds the fluid into the interior of the filter element or which accepts fluid received from the interior of the filter element and feeds the fluid to the port. The filter element is insertable into the housing along the axial direction of the filter element. The end cap has a plurality of circumferentially spaced, outwardly directed projections which rest on a seat formation of the housing to determine the axial position of the inserted filter element relative to the housing. The housing further has an overhang formation with a plurality of channels formed therein. The channels are arranged such that, on insertion of the filter element, the projections align with and travel along respective of the channels to arrive at the seat formation. When the projections rest on the seat formation the inserted filter element is angularly displaceable about its axial direction relative to the housing such that the overhang formation traps the projections to prevent withdrawal of the filter element in its axial direction from the housing.

## Description

### Field of the Invention

The present invention relates to a filter assembly for removing entrained material from a fluid stream.

### Background of the Invention

A conventional filter assembly, e.g. for removing liquid droplets from compressed air, has a housing which contains a consumable filter element located in the flow path of a fluid to be filtered so that the fluid flows through the element.

A typical assembly includes a top manifold which is detachably joined to the housing, the filter element having a top end cap which engages with the manifold. The filter element is usually tubular in shape and can be removably inserted into the housing when the housing is detached from the manifold.

Fluid to be filtered is directed from an inlet port in the manifold via an opening in the end cap to the central region of the filter element, the fluid then flowing through the material of the filter element and exiting the assembly through an outlet port, typically in the manifold.

The end cap typically has a formation which sealingly engages with a corresponding formation on the manifold to prevent leakage of fluid en route from the inlet port to the central region of the filter element. For example, the end cap can have a spigot in which the opening in the end cap is formed, the spigot inserting into a receiving port of the manifold and the seal being effected by 0-rings.

It would be desirable to provide a filter assembly which assists the disengagement of the end cap from the manifold when the housing is detached from the manifold. Additionally or alternatively, it would be desirable to provide a filter assembly which promotes the formation of a tight seal between the end cap and the manifold when the housing is joined to the manifold.

WO 2006/013326 proposes a filter assembly which comprises head and body parts, with an inlet port in the head part for a gas stream to flow into the assembly. The head and body parts have formations which enable them to be connected to one another and separated by relative rotation. A filter element fits into the body part, and the end cap and the body part have interengaging formations in the form of at least one rib and at least one groove, arranged so that the rib can be slid into the groove when the filter element is fitted into the body part, and so that the filter element rotates with the body part relative to the head part.

GB 2222536A proposes a filter assembly comprising a filter bowl and a head, the bowl enclosing a filter cartridge. The bowl and the head join are joined by a bayonet connection. The bowl has a number of buttresses which can engage with flanges on an upper portion of the filter cartridge. When the bowl is rotated to its release position, it is pulled downwards and mechanical engagement of lower buttress parts with a flange ensues that the cartridge descends as the bowl descends. However, rotation of the bowl does not bring about simultaneous rotation of the cartridge because of the tight fit of O-rings sealing the upper portion of the filter cartridge to the head. Further, stops limit the degree to which the filter cartridge can rotate relative to the bowl.

### Summary of the Invention

In one aspect, the present invention provides a filter assembly for removing entrained material from a fluid stream, the assembly comprising a manifold with a port through which the fluid is received into or removed from the assembly, and a housing into which is inserted a tubular filter element having walls of a filtration medium, the housing and the manifold having joining formations which allow them to be joined together and separated apart by relative rotation, the filter element having an end cap thereon which sealingly engages with the manifold, and the end cap having an opening therein which accepts fluid received through the port and feeds the fluid into the interior of the filter element or which accepts fluid received from the interior of the filter element and feeds the fluid to the port;
wherein the filter element is insertable into the housing along the axial direction of the filter element, the end cap having a plurality of circumferentially spaced, outwardly directed projections which rest on a seat formation of the housing to determine the axial position of the inserted filter element relative to the housing, the housing further having an overhang formation with a plurality of channels formed therein, the channels being arranged such that, on insertion of the filter element, the projections align with and travel along respective of the channels to arrive at the seat formation; and
wherein when the projections rest on the seat formation the inserted filter element is angularly displaceable about its axial direction relative to the housing such that the overhang formation traps the projections to prevent withdrawal of the filter element in its axial direction from the housing.

Advantageously, the projections, as well as determining the axial position of the inserted filter element relative to the housing, can help to centrally locate the filter element in the housing.

When the housing is separated from the manifold, the entrapment of the projections by the overhang formation can ensure that the filter element descends as the housing descends, helping to disengage the end cap from the manifold. Further, the filter element, which after use may be contaminated and liable to shed filtered material, can conveniently be retained in the separated housing.

The filter assembly may have any one or, to the extent that they are compatible, any combination of the following optional features.

Typically the manifold has a second port. When fluid is received through the first port to be fed into the interior of the filter element, the fluid can pass through the filtration medium and then be routed to the second port to leave the assembly. Alternatively, fluid can initially enter the assembly at the second port, be routed to the outside of the tubular filter element to pass through the filtration medium to the interior of the filter element, and then be fed to the first port. However, the second port may be formed in e.g. the housing.

The fluid can be gas or liquid.

The joining formations typically form a bayonet or a screw thread connection.

The end cap typically has a spigot in which the opening for accepting the received fluid is formed. The manifold may then have a corresponding receiving port into which the spigot is inserted.

The sealing engagement between the end cap and the manifold is typically effected by one or more 0-rings, e.g. positioned on the aforementioned spigot.

The end cap may have two or more of the projections, and preferably four or more of the projections. The projections can be equally spaced, and may be similarly shaped so that the filter element can be inserted in different orientations relative to the housing. Alternatively, the projections can be arranged (e.g. through unequal spacing and/or unequal sizing) so that the filter element can be inserted in only one orientation relative to the housing.

Relative to the insertion direction of the filter element, the projections may have leading surfaces which slope rearwardly with increasing radial distance. Such surfaces can help to guide the end cap into the housing. For example, if one of the leading surfaces contacts a point on a lip or rim of the housing as the filter element is inserted therein, further insertion tends to move the end cap laterally away from the point of contact and thereby better aligns the end cap with the housing.

Typically, the projections cooperate with the housing to determine the lateral position of the inserted filter element relative to the housing when the projections rest on the seat formation.

The seat formation typically extends circumferentially continuously around the housing. For example, it may be formed by a shoulder which extends in a ring around the inner wall of the housing. However, as long as the projections are able to rest on the seat formation with the inserted filter element angularly displaceable about its axial direction relative to the housing, the seat formation does not need to be circumferentially continuous.

The projections may be shaped such that, when the projections rest on the seat formation and before the end cap is sealingly engaged with the manifold, the filter element is freely rotatable about its axial direction relative to the housing, the overhang formation trapping the projections when the projections are out of angular alignment with the channels.

When the housing containing the filter element is joined to the manifold, the sealing engagement of the end cap with the manifold typically tends to hold the filter element stationary relative to the manifold so that the filter element rotates relative to the housing. This angular displacement takes the projections out of alignment with the channels. Subsequently, when the housing is separated from the manifold, the projections are trapped by the overhang formation whereby the filter element can descend as the housing descends so that the end cap is released from the manifold.

By allowing the filter element to freely rotate about its axial direction relative to the housing, the provision of stops limiting the degree to which the filter element can rotate becomes unnecessary. Thus the construction of the filter element and the housing can be simplified.

Preferably the projections and their respective channels are configured whereby, if the projections become realigned with the channels during the separation of the housing from the manifold, continued rotation of the housing displaces the filter element about its axial direction relative to the housing such that the overhang formation again traps the projections to prevent withdrawal of the filter element in its axial direction from the housing.

Thus, appropriate configuration of the projections and channels can prevent the projections inadvertently entering their respective channels when the housing is separated from the manifold. For example, the projections can be a close fit to the channels such that travel by the projections along the channels is not possible before the projections and the channels move out of alignment as the housing rotates relative to the end cap.

Preferably the channels narrow towards the seat formation. This can help to guide the projections into the channels when the filter element is inserted into the housing, but nonetheless provide a close fit which prevents the projections reentering the channels when the housing is separated from the manifold.

One, some or all of the projections in cooperation with the respective channel(s) may be configured to provide a detent to the withdrawal of the filter element when the projections are aligned with the channels. Preferably the detent is formed when the or each projection arrives at a mouth of the respective channel adjacent the seat formation. For example, the or each projection can have resiliently deformable portions at side surfaces thereof, the resiliently deformable portions engaging with corresponding sides of the respective channel to provide resistance to the withdrawal of the filter. The resistance, which can be overcome by applying a sufficient withdrawal force, nonetheless can help to prevent the projections inadvertently entering their respective channels when the housing is separated from the manifold. If the channels narrow towards the seat formation, the resistance to withdrawal may reduce as the projections continue along the channels. In an alternative example, the or each channel can have resiliently deformable portions at side surfaces thereof, e.g. at its mouth adjacent the seat formation, to engage with corresponding side surfaces of the or each projection.

Typically, the cooperation of the or each projection with the respective channel also provides a detent to insertion of the filter element into the housing. In particular, if the detent is formed when the or each projection is at the mouth of the respective channel adjacent the seat formation, release of the detent when the projection arrives at the seat formation can serve to indicate to a user that the filter element if fully inserted.

Alternatively to the free rotation of the filter element relative to the housing, the housing and the filter element may have corresponding abutment surfaces which determine a maximum angular displacement of the inserted filter element relative to the housing, the maximum angular displacement being less than the relative rotation between the housing and the manifold on joining and separating the housing so that the filter element is required to rotate with the housing for part of the relative rotation when the housing and the manifold are joined together and is also required to rotate with the housing for part of the relative rotation when the housing and the manifold are separated apart.

On joining the housing to the manifold, the engagement of the end cap with the manifold typically tends to hold the filter element stationary relative to the manifold so that the filter element rotates relative to the housing. However, when the rotation of the end cap relative to the housing causes corresponding abutment surfaces to meet, the end cap is required to rotate with the housing. This rotation can promote a better engagement of the end cap and the manifold, e.g. by improving the seating of one or more O-rings.

Subsequently, on separating the housing from the manifold, the sealing engagement of the end cap with the manifold typically tends to hold the filter element stationary relative to the manifold so that the filter element rotates relative to the housing. The entrapment of the projections by the overhang formation, however, can ensure that the filter element descends as the housing descends, helping to release the end cap from the manifold. Further, when the rotation of the filter element relative to the housing exceeds the maximum angular displacement, corresponding abutment surfaces can again meet, requiring the end cap to rotate with the housing. This can further assist the release of the end cap from the manifold.

Conveniently, the abutment surfaces of the housing can be formed by side surfaces of one or more of the channels.

Conveniently, the abutment surfaces of the filter element can be formed by side surfaces of one or more of the projections.

The maximum angular displacement may be 2° or more. The maximum angular displacement may be 175° or less, preferably 90° or 45° or less, and more preferably 10° or less.

Further aspects of the invention respectively provide (i) the housing and (ii) the filter element of the filter assembly of the previous aspect (optionally including any one or, to the extent that they are compatible, any combination of the optional features of the filter assembly).

### Brief Description of the Drawings

Embodiments of the invention will now be described by way of example with reference to the accompanying drawings in which:
Figure 1 shows a perspective partial cut-away view of the top part of a housing for a filter element and the end cap of the filter element of a first embodiment of a filter assembly according to the invention;
Figure 2 shows the same view as Figure 1 but without the end cap to better show internal features of the housing;
Figure 3 shows a perspective partial cut-away view of the top part of a housing for a filter element and the end cap of the filter element of a second embodiment of a filter assembly according to the invention;
Figure 4 shows the same view as Figure 3 but without the end cap to better show internal features of the housing;
Figure 5 shows a perspective view of the end cap of a filter element of a third embodiment of a filter assembly according to the invention;
Figure 6 shows a perspective view of the end cap of a filter element of a fourth embodiment of a filter assembly according to the invention;
Figure 7 shows a perspective view of the end cap of a filter element of a fifth embodiment of a filter assembly according to the invention; and
Figure 8 shows a perspective view of the end cap of a filter element of a sixth embodiment of a filter assembly according to the invention.

### Detailed Description

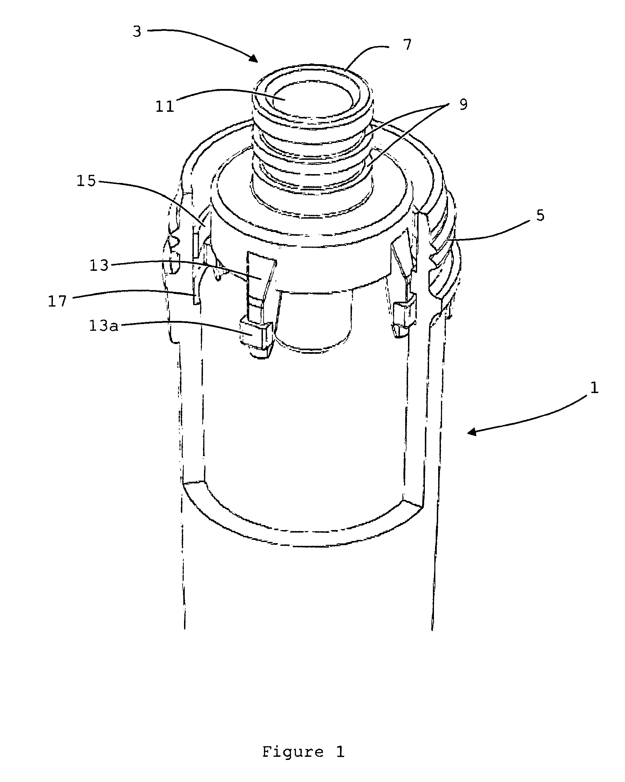

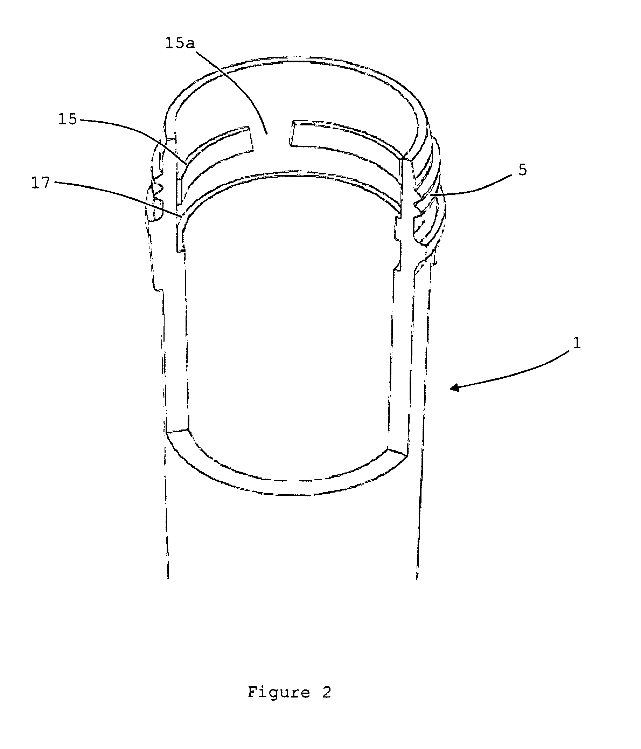

Figure 1 shows a perspective partial cut-away view of the top part of a housing 1 for a filter element and the end cap 3 of the filter element of a first embodiment of a filter assembly according to the invention. To better show features of the housing and the end cap, the tube of filtration medium which extends downwards from the end cap, and the manifold to which the housing is joined and with which the end cap sealingly engages are not shown. Figure 2 shows the same view as Figure 1 but without the end cap to better show internal features of the housing.

The manifold has an inlet port through which the fluid (which can be gas or liquid) to be filtered is received into the assembly. The housing may extend in any direction from the manifold, e.g. downwardly, upwardly or at some angle away from the vertical. Purely for descriptive convenience, in the following we consider a housing which extends downwardly from the manifold. The housing 1 is bowl-shaped and has a screw thread 5 at its mouth which screws onto a complimentary thread on the manifold to allow the housing manifold to be joined together and separated apart by relative rotation.

The end cap 3 has a spigot 7 with external circumferential grooves 9 into which are fitted respective 0-rings (not shown). The spigot mates with a receiving port of the manifold. The fluid received through the inlet port travels inside the manifold to the receiving port and then enters the interior of the filter element through an opening 11 formed in the spigot. The O-rings prevent leakage of the fluid at the connection between the spigot and the receiving port.

The filter element is inserted into the housing 1 through the mouth thereof and along the axial direction of the filter element. Thus, the filter element and the housing are coaxial, the tube of filtration medium entering the housing first and the end cap 3 entering last.

On passing through the tube of filtration medium, the filtered fluid returns upwardly through the annular space formed between the inner surface of the housing and the outer surface of the filter element. The gap between the housing and filter element is maintained by four circumferentially equally spaced, outwardly directed projections 13 on the end cap. The filtered fluid then re-enters the manifold to exit the assembly at an outlet port. The fluid has to pass around the projections in order to re-enter the manifold. Therefore, preferably the total cross-sectional area of the projections transversely to the direction of flow is reduced or minimised to provide as little obstruction to the flow as possible.

The flow through the filter assembly may be reversed, so that fluid flows in through the outlet port, passes through the filtration medium, and then flows through the opening in the end cap to exit the manifold through the inlet port.

The end cap projections 13 each terminate in a rectangular-shaped tab 13a (although other shapes for the tabs, such as triangular or circular, are possible). The inner wall of the housing has a raised ring 15 which is divided into four parts by four circumferentially spaced channels 15a. The radial distance from the outer face of the tabs to the axis of the end cap is greater than the radial distance from the inner face of the raised ring to the axis of the housing, preventing the tabs sliding passed the ring except through the channels. More particularly, the tabs 13a and channels 15a are arranged so that when the end cap and the housing are appropriately angularly aligned, each tab can enter a respective channel and the end cap slides downwardly further into the housing. The channels are wider at their top ends, which helps to guide the tabs into the channels. The downward movement of the tabs is arrested when the tabs exit the channels and come to rest on a seat formation formed by a shoulder 17 which is axially spaced from the raised ring and extends around the inner wall of the housing. The position of the shoulder thus determines the final axial position of the inserted filter element relative to the housing.

The tabs 13a can slide unimpeded around the shoulder 17 so that the filter element is freely rotatable about its axial direction relative to the housing. However, when the tabs are not aligned with the channels 15a, the overhang formed by the underside of the raised ring 15 traps the tabs to prevent withdrawal of the filter element in its axial direction from the housing.

The projections 13 centre the filter element relative to the housing 1 by contacting the inner wall of the housing above the shoulder 17. However, as explained below, they also assist with the removal of the housing and the filter element from the manifold.

With the filter element inserted into the housing 1 and the tabs 13a resting on the shoulder 17, the housing and filter element are presented to the manifold. As the screw thread 5 screws onto the complimentary thread on the manifold, the shoulder urges upwardly on the tabs so that the spigot 7 is pushed into the receiving port of the manifold, the O-rings in grooves 9 sealingly engaging the spigot to the port. The friction between the 0-rings and the receiving port prevents the filter element from rotating whereby the tabs travel around the circular track formed between the shoulder and the raised ring 15.

To separate the housing and filter element from the manifold, the housing is unscrewed in the opposite direction. The overhang formed by the raised ring 15 urges downwardly on the tabs 13a to pull the spigot out of the receiving port. During at least the early stages of the separation, the friction between the O-rings and the receiving port still prevents the filter element from rotating. Thus occasionally the tabs align with the channels 15a. However, the tabs are only slightly narrower than the bottom ends of the channels so that continued rotation of the housing displaces the tabs out of alignment with the channels before the tabs can enter the channels. Thus the overhang again urges downwardly on the tabs to continue pulling the spigot out of the receiving port. To reduce the possibility that the tabs 13a inadvertently enter the channels during separation of the housing and filter element from the manifold, the projections 13 can be unequally circumferentially spaced so that only one orientation of the filter element relative to the housing 1 aligns all the tabs 13a with the channels 15a. Alternatively or additionally, one or more of the tabs may be differently sized from the other tabs, corresponding channels 15a also being differently sized so that again only one orientation of the filter element relative to the housing aligns each tab with a channel along which the tab can travel.

Separation of the housing from the manifold therefore results in removal of the filter element with the housing. In this way, filtered material which accidently sheds from the filter element during its removal is captured by the housing.

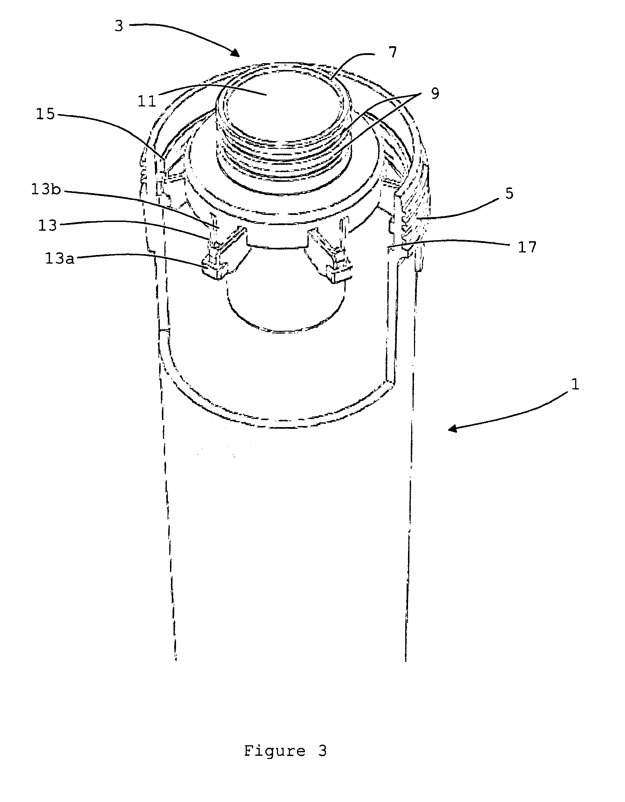

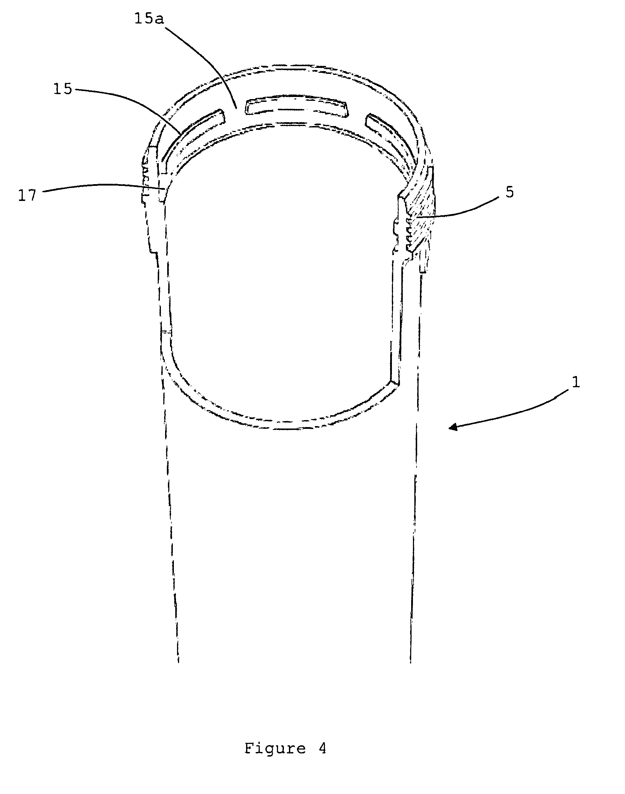

Figure 3 shows a perspective partial cut-away view of the top part of a housing for a filter element and the end cap of the filter element of a second embodiment of a filter assembly according to the invention. Again, the tube of filtration medium which extends downwards from the end cap, and the manifold to which the housing is joined and with which the end cap sealingly engages are not shown. Figure 4 shows the same view as Figure 3 but without the end cap to better show internal features of the housing. Corresponding features of the first and second embodiments share the same reference numbers.

The second embodiment is largely identical to the first embodiment except that the end cap 1 has six circumferentially spaced, outwardly directed projections 13 which each terminate in a rectangular-shaped tab 13a, and the inner wall of the housing has a raised ring 15 which is divided into six parts by six circumferentially spaced channels 15a. The side flanks of the projections are angled so that the angle between facing flanks of neighbouring projections is approximately 90°. This configuration allows tool access to the roots of the projections and hence facilitates finish machining of the end cap. Each projection also has a central through-hole 13b extending in the axial direction through which fluid can flow, thereby reducing the obstructive effect of the projections on the fluid flow.

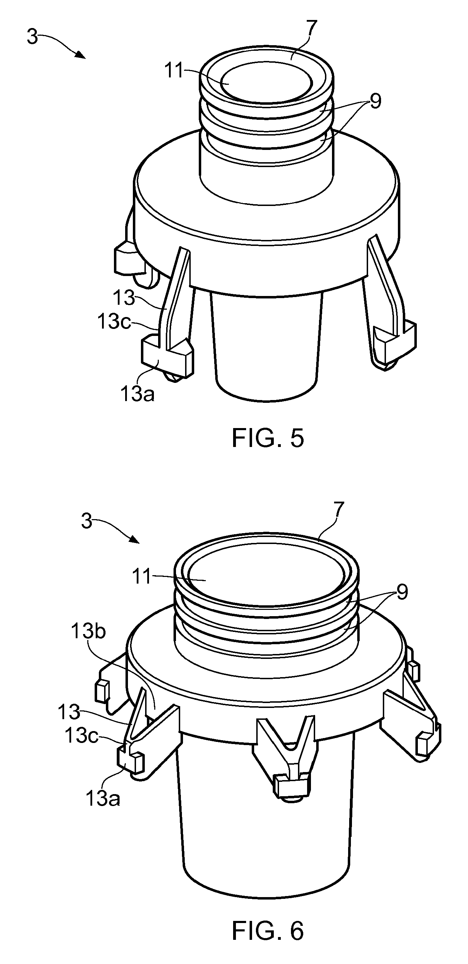

Figures 5 and 6 show respective perspective views of the end caps of filter elements of third and fourth embodiments of filter assemblies according to the invention. The end cap of the third embodiment is for use with the housing of the first embodiment shown in Figure 2, and the end cap of the fourth embodiment is for use with the housing of the second embodiment shown in Figure 4. Corresponding features of the first to fourth embodiments share the same reference numbers.

The end caps of the third and fourth embodiments are respectively identical to those of first and second embodiments, except that each projection 13 has a nose portion 13c which remains within the respective channel 15a when the tab 13a rests on the shoulder 17. The sides of these nose portions and the facing sides of the channels form abutment surfaces which prevent the free rotation of the tabs around the shoulder. The width of the channels and width of the nose portions determines the maximum angular displacement that the inserted filter element can make relative to the housing 1. In the third and fourth embodiments, this maximum angular displacement is only a few degrees, whereas to unscrew the housing from the manifold requires approximately two full turns for the first embodiment and approximately four full turns for the second embodiment.

Thus when the housing 1 and filter element of the third or fourth embodiment are presented to the manifold and the spigot 7 is pushed into the receiving port of the manifold, frictional interaction of the 0-rings in grooves 9 with the receiving port initially prevents the filter element from rotating. However, after a few degrees of rotation the facing abutment surfaces of the nose portions 13c and the channels 15a meet, forcing the filter element to turn with the housing. The shoulder 17 again urges upwardly on the tabs 13a so that the spigot 7 is pushed into the receiving port of the manifold, and the 0-rings sealingly engage the spigot to the receiving port. However, the enforced rotation of the filter element can improve the seating of the O-rings.

On unscrewing the housing 1 from the manifold, the frictional interaction of the 0-rings with the receiving port again initially prevents the filter element from rotating. Once more after a few degrees of rotation the facing abutment surfaces on the other sides of the nose portions 13c and the channels 15a meet, forcing the filter element to turn with the housing. The rotation of the spigot can help to loosen the O-rings from the receiving port. Moreover, with the abutment surfaces in contact, the tabs 13a are kept out of alignment with the channels 15a, and the overhang formed by the raised ring 15 urges downwardly on the tabs to pull the spigot out of the receiving port.

Like the first and second embodiments, separation of the housing from the manifold advantageously results in simultaneous removal of the filter element with the housing.

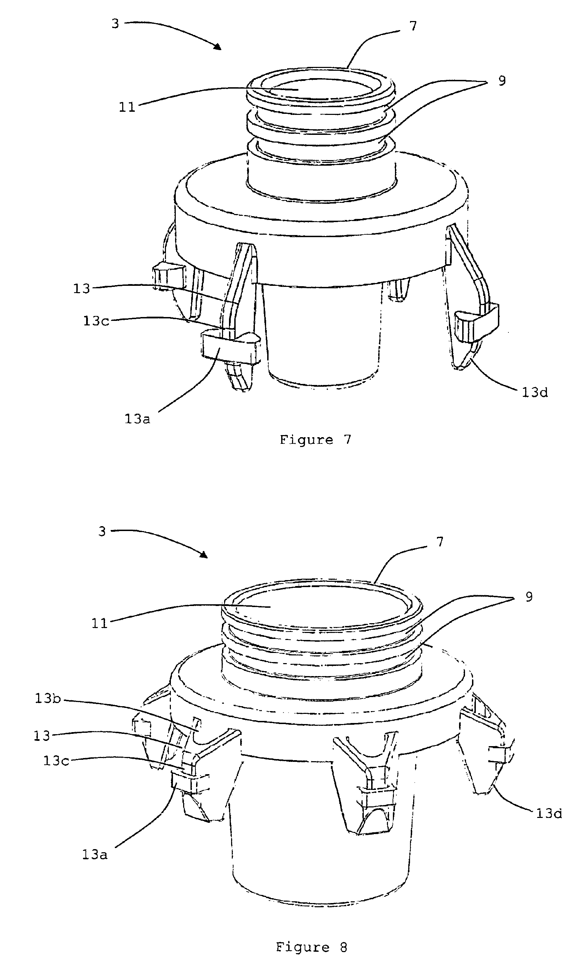

Figures 7 and 8 show respective perspective views of the end caps of filter elements of fifth and sixth embodiments of filter assemblies according to the invention. The end cap of the fifth embodiment is for use with the housing of the first embodiment shown in Figure 2, and the end cap of the sixth embodiment is for use with the housing of the second embodiment shown in Figure 4. Corresponding features of the first to sixth embodiments share the same reference numbers.

The end caps of the fifth and sixth embodiments are respectively identical to those of third and second embodiments, except that each projection 13 has a leading surface 13d which, relative to the insertion direction of the filter element (i.e. downwards in Figures 7 and 8), slopes rearwardly (i.e. upwards in Figures 7 and 8) with increasing radial distance. When the filter element is inserted through the mouth of the housing 1 with the element not properly aligned with the housing, these leading surfaces may strike the encircling rim of the mouth of the housing. However, the rearward slope then acts to move the end cap laterally away from the point of contact and into better axial alignment with the housing. Thus the sloped leading surfaces promote a "self-aligning" drop-in functionality of the filter element relative to the housing.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A filter assembly for removing entrained material from a fluid stream, the assembly comprising a manifold with a port through which the fluid is received into or removed from the assembly, and a housing into which is inserted a tubular filter element having walls of a filtration medium, the housing and the manifold having joining formations which allow them to be joined together and separated apart by relative rotation, the filter element having an end cap thereon which sealingly engages with the manifold, and the end cap having an opening therein which accepts fluid received through the port and feeds the fluid into the interior of the filter element or which accepts fluid received from the interior of the filter element and feeds the fluid to the port;
wherein the filter element is insertable into the housing along the axial direction of the filter element, the end cap having a plurality of circumferentially spaced, outwardly directed projections which rest on a seat formation of the housing to determine the axial position of the inserted filter element relative to the housing, the housing further having an overhang formation with a plurality of channels formed therein, the channels being arranged such that, on insertion of the filter element, the projections align with and travel along respective of the channels to arrive at the seat formation; and
wherein when the projections rest on the seat formation the inserted filter element is angularly displaceable about its axial direction relative to the housing such that the overhang formation traps the projections to prevent withdrawal of the filter element in its axial direction from the housing.

2. A filter assembly according to claim 1, wherein the projections are shaped such that, when the projections rest on the seat formation and before the end cap is sealingly engaged with the manifold, the filter element is freely rotatable about its axial direction relative to the housing, the overhang formation trapping the projections when the projections are out of angular alignment with the channels.

3. A filter assembly according to claim 2, wherein the projections and their respective channels are configured whereby, if the projections become realigned with the channels during the separation of the housing from the manifold, continued rotation of the housing displaces the filter element about its axial direction relative to the housing such that the overhang formation again traps the projections to prevent withdrawal of the filter element in its axial direction from the housing.

4. A filter assembly according to any one of claims 1 to 3, wherein the channels narrow towards the seat formation.

5. A filter assembly according any one of the previous claims, wherein one or more of the projections in cooperation with the respective channel(s) is configured to provide a detent to the withdrawal of the filter element when the projections are aligned with the channels.

6. A filter assembly according to claim 1, wherein the housing and the filter element have corresponding abutment surfaces which determine a maximum angular displacement of the inserted filter element relative to the housing, said maximum angular displacement being less than the relative rotation between the housing and the manifold on joining and separating the housing so that the filter element is required to rotate with the housing for part of the relative rotation when the housing and the manifold are joined together and is also required to rotate with the housing for part of the relative rotation when the housing and the manifold are separated apart.

7. A filter assembly according to claim 6, wherein the abutment surfaces of the housing are formed by side surfaces of one or more of the channels.

8. A filter assembly according to claim 6 or 7, wherein the abutment surfaces of the filter element are formed by side surfaces of one or more of the projections.

9. A filter assembly according to any one of the previous claims, wherein, relative to the insertion direction of the filter element, the projections have leading surfaces which slope rearwardly with increasing radial distance.

10. A filter assembly according to any one of the previous claims wherein the end cap has two or more of the projections.

11. The housing of the filter assembly of any one of the previous claims.

12. The filter element of the filter assembly of any one of claims 1 to 10.
